# EUROPEAN PATENT APPLICATION

(11) **EP 4 575 909 A1**
(43) Date of publication of application: **25.06.2025**
(21) Application number: 24185905.7
(22) Date of filing: 02.07.2024
(51) Int. Cl.: G06N 3/08, G06N 5/04, G06N 20/00, G06F 16/332, G06F 16/3329

(54) **METHOD AND APPARATUS FOR TRAINING QUESTION SOLVING MODEL, QUESTION SOLVING METHOD AND APPARATUS**

(30) Priority: 20.12.2023 CN 202311763895
(71) Applicant: Beijing Baidu Netcom Science and Technology Co., Ltd, Beijing 100085 (CN)
(72) Inventor: HE, Feng, Beijing, 100085 (CN); WANG, Jianhua, Beijing, 100085 (CN); OU, Junjie, Beijing, 100085 (CN); HUANG, Pingxuan, Beijing, 100085 (CN); FENG, Zhifan, Beijing, 100085 (CN); CUI, Xiaopeng, Beijing, 100085 (CN); SHE, Qiaoqiao, Beijing, 100085 (CN); WU, Hua, Beijing, 100085 (CN)
(74) Representative: Michalski Hüttermann & Partner Patentanwälte mbB

(57) **Abstract**

The present disclosure provides a method and apparatus for training a question solving model, a question solving method and apparatus, an electronic device and a readable storage medium. The method for training a question solving model includes: acquiring a first sample question; inputting the first sample question and a solving step grabbing template into a large language model to obtain a first sample solving step; inputting the first sample question, the first sample solving step and an answer grabbing template into the large language model to obtain a first sample answer; pre-training a step planning model according to the first sample question and the first sample solving step; pre-training the large language model according to the first sample question, the first sample solving step and the first sample answer; and acquiring the question solving model according to the step planning model and the large language model obtained by pre-training. The question solving method includes: acquiring a to-be-solved question; inputting the to-be-solved question into a step planning model to obtain a solving step; and inputting the to-be-solved question and the solving step into a large language model to obtain an answer.

## Description

### Field of the Disclosure

The present disclosure relates to the field of computer technologies, and particularly to the field of artificial intelligence technologies, such as large models, natural language processing, deep learning, and provides a method and apparatus for training a question solving model, a question solving method and apparatus, an electronic device and a readable storage medium.

### Background of the Disclosure

A large language model (LLM) refers to a deep learning model obtained by performing training using a large quantity of text data, and can generate a natural language text or understand meaning of the natural language text. The LLM has a certain inference capability, such that the LLM can solve an input question to obtain an answer of the question. However, the LLM in the prior art has a problem that accuracy of the obtained answer is low when the question is solved by inference.

### Summary of the Disclosure

According to a first aspect of the present disclosure, there is provided a method for training a question solving model, including: acquiring a first sample question; inputting the first sample question and a solving step grabbing template into a large language model to obtain a first sample solving step output by the large language model; inputting the first sample question, the first sample solving step and an answer grabbing template into the large language model to obtain a first sample answer output by the large language model; pre-training a step planning model according to the first sample question and the first sample solving step; pre-training the large language model according to the first sample question, the first sample solving step and the first sample answer; and acquiring the question solving model according to the step planning model and the large language model obtained by pre-training.

According to a second aspect of the present disclosure, there is provided a question solving method, including: acquiring a to-be-solved question; inputting the to-be-solved question into a step planning model in a question solving model to obtain a solving step output by the step planning model; and inputting the to-be-solved question and the solving step into a large language model in the question solving model to obtain an answer output by the large language model.

According to a third aspect of the present disclosure, there is provided an apparatus for training a question solving model, including: a first acquiring unit configured to acquire a first sample question; a first processing unit configured to input the first sample question and a solving step grabbing template into a large language model to obtain a first sample solving step output by the large language model; a second processing unit configured to input the first sample question, the first sample solving step and an answer grabbing template into the large language model to obtain a first sample answer output by the large language model; a first pre-training unit configured to pre-train a step planning model according to the first sample question and the first sample solving step; a second pre-training unit configured to pre-train the large language model according to the first sample question, the first sample solving step and the first sample answer; and a constructing unit configured to acquire the question solving model according to the step planning model and the large language model obtained by pre-training.

According to a fourth aspect of the present disclosure, there is provided a question solving apparatus, including: a second acquiring unit configured to acquire a to-be-solved question; a first solving unit configured to input the to-be-solved question into a step planning model in a question solving model to obtain a solving step output by the step planning model; and a second solving unit configured to input the to-be-solved question and the solving step into a large language model in the question solving model to obtain an answer output by the large language model.

According to a fifth aspect of the present disclosure, there is provided an electronic device, including: at least one processor; and a memory connected with the at least one processor communicatively, wherein the memory stores instructions executable by the at least one processor to enable the at least one processor to perform the methods as mentioned above.

According to a sixth aspect of the present disclosure, there is provided a non-transitory computer readable storage medium with computer instructions stored thereon, wherein the computer instructions are used for causing a computer to perform the method as mentioned above.

According to a seventh aspect of the present disclosure, there is provided a computer program product including a computer program which, when executed by a processor, implements the method as mentioned above.

It should be understood that the statements in this section are not intended to identify key or critical features of the embodiments of the present disclosure, nor limit the scope of the present disclosure. Other features of the present disclosure will become apparent from the following description.

### Brief Description of Drawings

The drawings are used for better understanding the present solution and do not constitute a limitation of the present disclosure. In the drawings,
Fig. 1 is a schematic diagram according to a first embodiment of the present disclosure;
Fig. 2 is a schematic diagram according to a second embodiment of the present disclosure;
Fig. 3 is a schematic diagram according to a third embodiment of the present disclosure;
Fig. 4 is a schematic diagram according to a fourth embodiment of the present disclosure;
Fig. 5 is a schematic diagram according to a fifth embodiment of the present disclosure; and
Fig. 6 is a block diagram of an electronic device configured to implement a method for training a question solving model or a question solving method according to the embodiment of the present disclosure.

### Detailed Description of Preferred Embodiments

The following part will illustrate exemplary embodiments of the present disclosure with reference to the drawings, including various details of the embodiments of the present disclosure for a better understanding. The embodiments should be regarded only as exemplary ones. Therefore, those skilled in the art should appreciate that various changes or modifications can be made with respect to the embodiments described herein without departing from the scope and spirit of the present disclosure. Similarly, for clarity and conciseness, the descriptions of the known functions and mechanisms are omitted in the descriptions below.

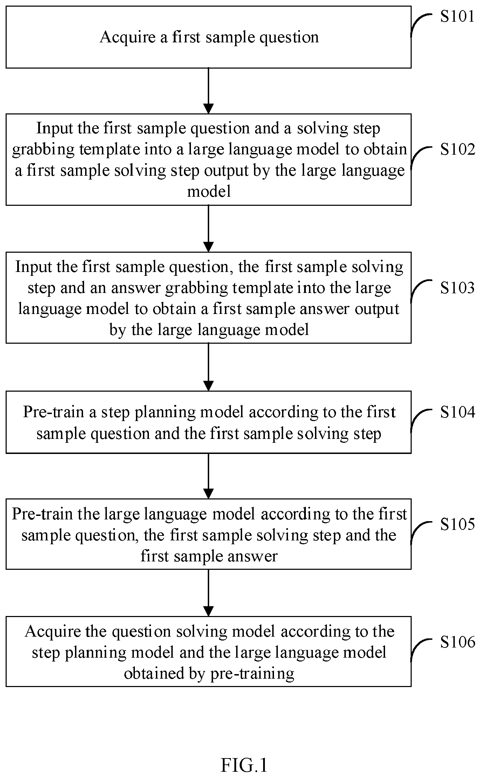

Fig. 1 is a schematic diagram according to a first embodiment of the present disclosure. As shown in Fig. 1, a method for training a question solving model according to the present embodiment includes the following steps:
S101: acquiring a first sample question;
S102: inputting the first sample question and a solving step grabbing template into a large language model to obtain a first sample solving step output by the large language model;
S103: inputting the first sample question, the first sample solving step and an answer grabbing template into the large language model to obtain a first sample answer output by the large language model;
S104: pre-training a step planning model according to the first sample question and the first sample solving step;
S105: pre-training the large language model according to the first sample question, the first sample solving step and the first sample answer; and
S106: acquiring the question solving model according to the step planning model and the large language model obtained by pre-training.

In the method for training a question solving model according to the present embodiment, on the one hand, the first sample solving step and the first sample answer are obtained by the large language model according to the first sample question, the preset solving step grabbing template and the preset answer grabbing template, a purpose of obtaining pre-training data according to the large language model is achieved, and a cost for obtaining the pre-training data can be reduced; on the other hand, the large language model is pre-trained in conjunction with the first sample solving step in the pre-training data corresponding to the first sample question, such that the large language model can generate the answer corresponding to the question according to a relationship between the question and the solving step, and therefore, a pre-training effect of the large language model is improved, and the large language model in the question solving model can generate the more accurate answer.

In the present embodiment, when S101 is executed, a question mined from the Internet may be used as the first sample question; a number of the obtained first sample questions is not limited in the present embodiment, and may be one or more.

In the present embodiment, when the S101 of acquiring a first sample question is executed, an answer corresponding to the first sample question may be further acquired.

In the present embodiment, after the S101 of acquiring a first sample question is executed, the S102 of inputting the first sample question and a solving step grabbing template into a large language model to obtain a first sample solving step output by the large language model is executed; the first sample solving step obtained in the present embodiment is used to indicate a solving logic when the first sample question is solved.

In the present embodiment, the solving step grabbing template is preset and used for being input to the large language model as a prompt, such that in combination with the solving step grabbing template, the large language model outputs the first sample solving step corresponding to the input first sample question according to the input first sample question.

For example, the solving step grabbing template in the present embodiment may be "you are an inference master", the solving step corresponding to a question may be extracted on the premise of giving the question, no excessive details are given, attention is paid to a core logic, and some examples of the task are as follows: [question]: Children play games because they are bored. What does "they" in the sentence mean? A: children, B: games; [solving step]: 1, analyzing the sentence to find out names corresponding to possible pronouns; 2, considering a syntactic structure and a semantic logic, and judging possible references; and 3, synthesizing the syntactic structure and the semantic logic to give the final answer.

In the present embodiment, when S102 is executed, the first sample question and the above-mentioned solving step grabbing template are input into the large language model together, such that the large language model outputs the first sample solving step corresponding to the first sample question in combination with the solving step grabbing template.

It may be understood that, if S101 is executed to obtain a plurality of first sample questions in the present embodiment, the first sample solving step corresponding to each first sample question is acquired according to the solving step grabbing template when S102 is executed in the present embodiment.

For example, if the first sample question is "a forest ranger is required to carry a boa, a squirrel and pine cones from the east to the west of a forest, only one at a time; when the forest ranger is not present, the boa can eat the squirrel, and the squirrel can eat the pine cones; how to guarantee their security?", in the present embodiment, when S102 is executed, the first sample question and the above-mentioned solving step grabbing template are input into the large language model together, an output result of the large language model may be "1, analyzing a mutual exclusion relationship between the objects to determine a combination of objects which cannot coexist; 2, selecting a moving strategy which does not violate the mutual exclusion relationship and can realize a target, and listing specific operation steps", and the output result is taken as the first sample solving step corresponding to the first sample question.

In the present embodiment, after the S102 is executed to obtain the first sample solving step corresponding to the first sample question, the S103 of inputting the first sample question, the first sample solving step and an answer grabbing template into the large language model to obtain a first sample answer output by the large language model is executed; the first sample answer in the present embodiment contains an answer corresponding to each solving step.

In the present embodiment, the answer grabbing template is preset and used for being input to the large language model as a prompt, such that in combination with the answer grabbing template, the large language model outputs the first sample answer corresponding to the first sample question according to the input first sample question and the input first sample solving step.

For example, the answer grabbing template in the present embodiment may be "you are an inference master", and on the premise of giving a solving step of a question, the question may be answered according to a logic of the solving step; specifically, requirements are as follows: 1, please organize a logic of the answer according to the core logic of the given solving step; 2, do not include a title of the related solving step, please organize the answer in a reasonable structural mode, please note that key logics are not omitted during answering, and please answer in detail; 3, if the solving step has a serious error, please answer according to your own solving step based on your own understanding; some examples of the task are as follows: [question]: children play games because they are bored. What does "they" in the sentence mean? A: children, B: games; [solving step]: 1, analyzing the sentence to find out names corresponding to possible pronouns; 2, considering a syntactic structure and a semantic logic, and judging possible references; and 3, synthesizing the syntactic structure and the semantic logic to give the final answer [answer]: in this sentence "children play games because they are bored", the word "they" is used to replace a noun or nouns mentioned above to avoid duplication; in the context of this sentence, there are two nouns: children and games; 1, the syntax structure is first considered; "they are bored" is a clause to explain the reason why "children play games", and "they" is more likely to replace the subject in the clause, i.e., "children"; 2, the semantic logic is then considered; generally, a bored feeling belongs to a person instead of a game, and "they" means "children"; by synthesizing the syntactic structure and the semantic logic, it can be determined that "they" in this sentence means "children", and therefore, the answer is A: children.

In the present embodiment, when the S103 is executed, the first sample question, the first sample solving step and the above-mentioned answer grabbing template are input into the large language model together, such that the large language model outputs the first sample answer corresponding to the first sample solving step in combination with the answer grabbing template.

It may be understood that, if S101 is executed to obtain a plurality of first sample questions in the present embodiment, the first sample answer corresponding to each first sample question is acquired according to the answer grabbing template when S103 is executed in the present embodiment.

For example, if the first sample question is "a forest ranger is required to carry a boa, a squirrel and pine cones from the east to the west of a forest, only one at a time; when the forest ranger is not present, the boa can eat the squirrel, and the squirrel can eat the pine cones; how to guarantee their security?", if the first sample solving step is "1, analyzing a mutual exclusion relationship between the objects to determine a combination of objects which cannot coexist; 2, selecting a moving strategy which does not violate the mutual exclusion relationship and can realize a target, and listing specific operation steps", in the present embodiment, when S 103 is executed, the first sample question and the first sample solving step are input into the large language model together with the answer grabbing template, and the output result of the large language model may be "first, the mutual exclusion relationship between the boa, the squirrel and the pine cone is analyzed: the boa and the squirrel cannot stay together alone, the squirrel and the pine cone cannot stay together alone"; therefore, in order to ensure that all the objects are safely carried to the west of the forest: 1, firstly, the forest ranger takes the squirrel to the west of the forest; 2, then, the forest ranger returns and takes the boa to the west; 3, since the boa and the squirrel cannot be left together independently, the forest ranger takes the squirrel back, and next, the forest ranger brings the pine cone to the west of the forest, and finally, the forest ranger returns and brings the squirrel to the west of the forest.

In the present embodiment, after the S103 is executed to obtain the first sample answer, a triple formed by the first sample question as well as the first sample solving step and the first sample answer corresponding to the first sample question may be directly used as the pre-training data, and then, the step planning model and the large language model may be pre-trained using the pre-training data.

However, accuracy of the triple obtained by the large language model cannot be guaranteed, and if the accuracy of the triple serving as the pre-training data is low, a pre-training effect of the step planning model and the large language model may be reduced, such that accuracy of the solving step and the answer output by the finally obtained question solving model is low.

Therefore, in the present embodiment, after the S103 is executed to obtain the first sample answer, the method may further include: inputting the first sample question, the first sample solving step, the first sample answer and a data evaluation template into the large language model to obtain a data evaluation result output by the large language model, the data evaluation result acquired in the present embodiment being one of evaluation passing and evaluation failing, or being an evaluation score; and in the case where the obtained data evaluation result is determined to meet a preset requirement (the data evaluation result is determined to be evaluation passing or the evaluation score exceeds a preset score threshold), taking the first sample question, the first sample solving step and the first sample answer as the pre-training data.

That is, in the present embodiment, data evaluation may be performed on the formed triple by the large language model by means of the preset data evaluation template, such that only the triple passing the data evaluation is used as the pre-training data, thereby improving the accuracy of the obtained pre-training data, and further improving accuracy of pre-training performed on the step planning model and the large language model by using the obtained pre-training data.

In the present embodiment, the data evaluation template is preset and used for being input to the large language model as a prompt, such that in combination with the data evaluation template, the large language model outputs the data evaluation result according to the input first sample question, the input first sample solving step and the input first sample answer.

For example, the data evaluation template in the present embodiment may be "you are an inference master", the data evaluation result corresponding to a given question, solving step and answer may be acquired on the premise of giving the question, solving step and answer, the data evaluation result can be evaluation passing or evaluation failing or an evaluation score, and some examples of the task are as follows: [question]: Children play games because they are bored. What does "they" in the sentence mean? A: children, B: games; [solving step]: 1, analyzing the sentence to find out names corresponding to possible pronouns; 2, considering a syntactic structure and a semantic logic, and judging possible references; and 3, synthesizing the syntactic structure and the semantic logic to give the final answer; [answer]: in this sentence "children play games because they are bored", the word "they" is used to replace a noun or nouns mentioned above to avoid duplication; in the context of this sentence, there are two nouns: children and games; 1, the syntax structure is first considered; "they are bored" is a clause to explain the reason why "children play games", and "they" is more likely to replace the subject in the clause, i.e., "children"; 2, the semantic logic is then considered; generally, a bored feeling belongs to a person instead of a game, and "they" means "children"; by synthesizing the syntactic structure and the semantic logic, it can be determined that "they" in this sentence means "children", and therefore, the answer is A: children; [data evaluation result]: evaluation passing.

If the obtained data evaluation result is determined not to meet the preset requirement in the present embodiment, the first sample question, the first sample solving step and the first sample answer for current evaluation are discarded.

In the present embodiment, when the S103 is executed to take the first sample question, the first sample solving step and the first sample answer as the pre-training data in the case where the obtained data evaluation result is determined to meet the preset requirement, the method may further include: inputting the first sample question into a data generation model to obtain a candidate solving step and/or a candidate answer output by the data generation model, the data generation model in the present embodiment being obtained by pre-training and capable of outputting a solving step and/or an answer corresponding to an input question according to the question; and in the case where the candidate solving step is determined to be similar to the first sample solving step (similarity between the candidate solving step and the first sample solving step is greater than or equal to a preset similarity threshold) and/or the candidate answer is determined to be similar to the first sample answer (similarity between the candidate answer and the first sample answer is greater than or equal to a preset similarity threshold), taking the first sample question, the first sample solving step and the first sample answer as the pre-training data.

That is, in the present embodiment, after the obtained triple is primarily cleaned by the large language model, the triple is finally cleaned by the data generation model obtained by pre-training, thereby further improving the accuracy of the obtained pre-training data.

In the present embodiment, when the S103 is executed, if it is determined that the candidate solving step is not similar to the first sample solving step and/or the candidate answer is not similar to the first sample answer, the currently used first sample question, first sample solving step and first sample answer may be discarded; the solving step and the answer corresponding to the first sample question can be obtained in a manual labeling mode.

In addition, in the present embodiment, when the S103 is executed, a general rule may be set, such that the triple not satisfying the general rule is discarded; for example, the general rule may include a preset step number, and then, when it is determined that a number of the first sample solving steps is smaller than the preset step number, it is determined that the triple does not satisfy the general rule and is discarded.

In the present embodiment, after the S103 is executed to obtain the first sample answer, the S104 and the S105 may be executed to pre-train the step planning model and the large language model; an execution sequence of the S104 and the S105 is not limited in the present embodiment.

In the present embodiment, when the S 104 of pre-training a step planning model according to the first sample question and the first sample solving step is executed, the first sample question may be first input into the step planning model to obtain a first prediction solving step output by the step planning model; and a first loss function value is obtained according to the first sample solving step and the first prediction solving step, and parameters of the step planning model are adjusted according to the obtained first loss function value to obtain the pre-trained step planning model.

In the present embodiment, when the S105 of pre-training the large language model according to the first sample question, the first sample solving step and the first sample answer is executed, the first sample question and the first sample solving step can be first input into the large language model to obtain a first prediction answer output by the large language model; and a second loss function value is acquired according to the first sample answer and the first prediction answer, and parameters of the large language model are adjusted according to the acquired second loss function value to obtain the pre-trained large language model.

In the present embodiment, after the S104 is executed to pre-train the step planning model and the S105 is executed to pre-train the large language model, the S106 of acquiring the question solving model according to the step planning model and the large language model obtained by pre-training is executed.

In the present embodiment, when the S106 is executed, the pre-trained step planning model and the pre-trained large language model may be directly obtained to construct the question solving model, such that after the constructed question solving model obtains the input question, the obtained input question is firstly input into the step planning model to obtain the solving step output by the step planning model, and then, the obtained input question and the solving step are input into the large language model to obtain the answer output by the large language model.

In the present embodiment, when the S106 of acquiring the question solving model according to the step planning model and the large language model obtained by pre-training is executed, the method may further include: acquiring a second sample question, and determining a question type of the second sample question; acquiring a solving step corresponding to the determined question type as a second sample solving step of the second sample question, the solving steps corresponding to different question types being acquired in a pre-labeling mode in the present embodiment; carrying out supervised fine tuning (SFT) on the step planning model obtained by the pre-training according to the second sample question and the second sample solving step; and acquiring the question solving model according to the large language model obtained by the pre-training and the step planning model obtained by the SFT.

That is, in the present embodiment, the training effect of the step planning model may be improved by performing the SFT on the step planning model, and then, the question solving model is acquired according to the step planning model obtained by the SFT; in addition, in the present embodiment, the solving steps are obtained according to the question types of the sample questions, such that the question solving model can output the solving steps with similar numbers or logics for the same type of questions.

In the present embodiment, when the S106 of acquiring the question solving model according to the step planning model and the large language model obtained by pre-training is executed, the method may further include: acquiring a second sample question, and determining a question type of the second sample question; acquiring a solving step corresponding to the determined question type as a second sample solving step of the second sample question; determining a solving step type of the second sample solving step, and acquiring an answer corresponding to the determined solving step type as a second sample answer of the second sample question; performing SFT on the large language model obtained by pre-training according to the second sample question, the second sample solving step and the second sample answer; and acquiring the question solving model according to the step planning model obtained by the pre-training and the large language model obtained by the SFT.

That is, in the present embodiment, the training effect of the large language model may be improved by performing the SFT on the large language model, and then, the question solving model is acquired according to the large language model obtained by the SFT; in addition, in the present embodiment, the answers are obtained according to solving types of the sample solving steps, such that the question solving model can output the answers with similar numbers or logics for the same type of solving steps.

It can be understood that, in the present embodiment, when the S106 is executed, SFT may be performed on the step planning model and the large language model obtained by pre-training at the same time, and then, the question solving model is obtained according to the step planning model and the large language model obtained by the SFT.

For example, the training process of the question solving model in the present embodiment includes: acquiring a first sample question, in the present embodiment, the first sample question in a text format being acquired or a recognition result being used as the first sample question after voice recognition is performed on the obtained question in a voice format; inputting the obtained first sample question and a solving step grabbing template in a text format into a large language model to obtain a first sample solving step in a text format output by the large language model; inputting the first sample question, the first sample solving step and an answer grabbing template in a text format into the large language model to obtain a first sample answer in a text format output by the large language model; pre-training a step planning model according to the first sample question and the first sample solving step in the text format, and pre-training the large language model according to the first sample question, the first sample solving step and the first sample answer in the text format; and acquiring the question solving model according to the step planning model and the large language model obtained after the pre-training.

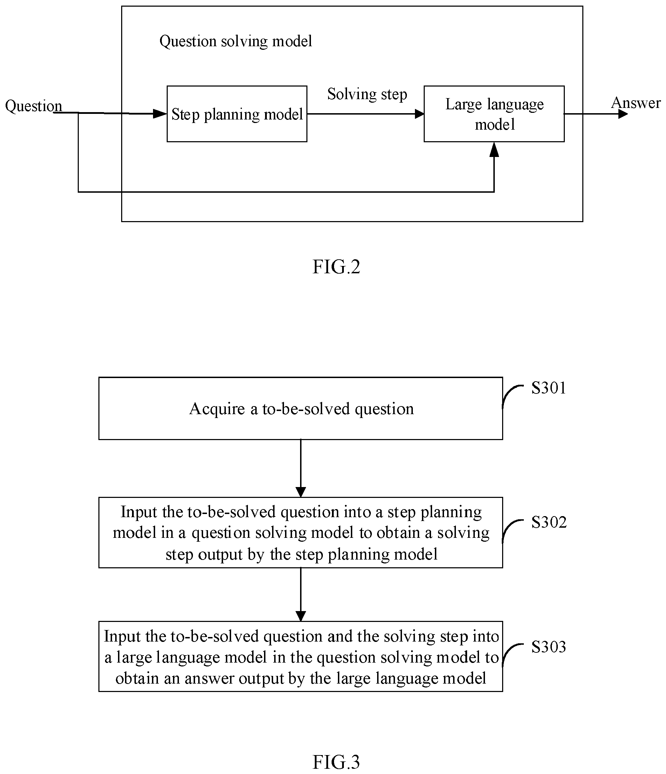

Fig. 2 is a schematic diagram according to a second embodiment of the present disclosure. A structural diagram of the question solving model in the present embodiment is shown in Fig. 2: the question solving model in the present embodiment includes a step planning model for outputting a solving step according to an input question and a large language model for outputting an answer corresponding to the input question according to the input question and the solving step output by the step planning model; the output answer may include a plurality of sub-answers, and each sub-answer corresponds to one solving step.

Fig. 3 is a schematic diagram according to a third embodiment of the present disclosure. As shown in Fig. 3, a question solving method according to the present embodiment includes the following steps:
S301: acquiring a to-be-solved question;
S302: inputting the to-be-solved question into a step planning model in a question solving model to obtain a solving step output by the step planning model; and
S303: inputting the to-be-solved question and the solving step into a large language model in the question solving model to obtain an answer output by the large language model.

That is, in the present embodiment, in combination with the question solving model obtained by pre-training, a manner of obtaining the solving step of the to-be-solved question first and then obtaining the answer according to the obtained solving step is adopted, thus improving accuracy of the obtained answer corresponding to the to-be-solved question, and enhancing a performance of the large language model in the question solving model when a complex inference question is solved.

For example, the solving process of the question in the present embodiment includes: acquiring a to-be-solved question, in the present embodiment, the to-be-solved question in a text format input from an input end being obtained or a recognition result being used as the to-be-solved question after voice recognition is carried out on the question in a voice format input from the input end; inputting the to-be-solved question into a step planning model in a question solving model to obtain a solving step in a text format output by the step planning model; inputting the to-be-solved question and the solving step in the text format into a large language model in the question solving model to obtain an answer in a text format output by the large language model as a solving result corresponding to the to-be-solved question, and returning the acquired answer to the input end for display to a user.

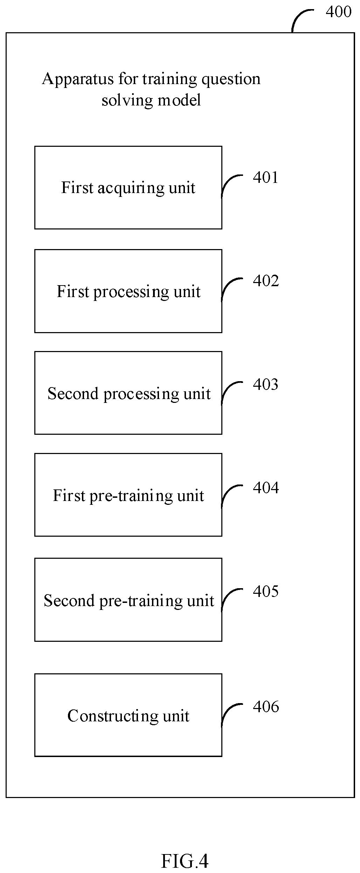

Fig. 4 is a schematic diagram according to a fourth embodiment of the present disclosure. As shown in Fig. 4, an apparatus 400 for training a question solving model according to the present embodiment includes:
a first acquiring unit 401 configured to acquire a first sample question;
a first processing unit 402 configured to input the first sample question and a solving step grabbing template into a large language model to obtain a first sample solving step output by the large language model;
a second processing unit 403 configured to input the first sample question, the first sample solving step and an answer grabbing template into the large language model to obtain a first sample answer output by the large language model;
a first pre-training unit 404 configured to pre-train a step planning model according to the first sample question and the first sample solving step;
a second pre-training unit 405 configured to pre-train the large language model according to the first sample question, the first sample solving step and the first sample answer; and
a constructing unit 406 configured to acquire the question solving model according to the step planning model and the large language model obtained by pre-training.

The first acquiring unit 401 may take a question mined from the Internet as the first sample question; a number of the obtained first sample questions is not limited in the present embodiment, and may be one or more.

When acquiring the first sample question, the first acquiring unit 401 may further acquire an answer corresponding to the first sample question.

In the present embodiment, after the first acquiring unit 401 acquires the first sample question, the first processing unit 402 inputs the first sample question and the solving step grabbing template into the large language model to obtain the first sample solving step output by the large language model; the first sample solving step obtained by the first processing unit 402 is used to indicate a solving logic when the first sample question is solved.

In the present embodiment, the solving step grabbing template is preset and used for being input to the large language model as a prompt, such that in combination with the solving step grabbing template, the large language model outputs the first sample solving step corresponding to the input first sample question according to the input first sample question.

The first processing unit 402 inputs the first sample question and the above-mentioned solving step grabbing template into the large language model together, such that the large language model outputs the first sample solving step corresponding to the first sample question in combination with the solving step grabbing template.

It may be understood that, if a plurality of first sample questions are obtained, the first processing unit 402 may acquire the first sample solving step corresponding to each first sample question according to the solving step grabbing template.

In the present embodiment, after the first processing unit 402 obtains the first sample solving step corresponding to the first sample question, the second processing unit 403 inputs the first sample question, the first sample solving step and the answer grabbing template into the large language model to obtain the first sample answer output by the large language model; the first sample answer obtained by the second processing unit 403 contains an answer corresponding to each solving step.

In the present embodiment, the answer grabbing template is preset and used for being input to the large language model as a prompt, such that in combination with the answer grabbing template, the large language model outputs the first sample answer corresponding to the first sample question according to the input first sample question and the input first sample solving step.

The second processing unit 403 inputs the first sample question, the first sample solving step and the above-mentioned answer grabbing template into the large language model together, such that the large language model outputs the first sample answer corresponding to the first sample solving step in combination with the answer grabbing template.

It may be understood that, if a plurality of first sample questions are obtained, the second processing unit 403 may acquire the first sample answer corresponding to each first sample question according to the answer grabbing template.

After obtaining the first sample answer, the second processing unit 403 may directly use a triple formed by the first sample question as well as the first sample solving step and the first sample answer corresponding to the first sample question as the pre-training data, and then pre-train the step planning model and the large language model using the pre-training data.

However, accuracy of the triple obtained by the large language model cannot be guaranteed, and if the accuracy of the triple serving as the pre-training data is low, a pre-training effect of the step planning model and the large language model may be reduced, such that accuracy of the solving step and the answer output by the finally obtained question solving model is low.

Therefore, after obtaining the first sample answer, the second processing unit 403 may further: input the first sample question, the first sample solving step, the first sample answer and a data evaluation template into the large language model to obtain a data evaluation result output by the large language model; and in the case where the obtained data evaluation result is determined to meet a preset requirement, take the first sample question, the first sample solving step and the first sample answer as the pre-training data.

That is, the second processing unit 403 may perform data evaluation on the formed triple by the large language model by means of the preset data evaluation template, such that only the triple passing the data evaluation is used as the pre-training data, thereby improving the accuracy of the obtained pre-training data, and further improving accuracy of pre-training performed on the step planning model and the large language model by using the obtained pre-training data.

In the present embodiment, the data evaluation template is preset and used for being input to the large language model as a prompt, such that in combination with the data evaluation template, the large language model outputs the data evaluation result according to the input first sample question, the input first sample solving step and the input first sample answer.

If the obtained data evaluation result is determined not to meet the preset requirement in the present embodiment, the first sample question, the first sample solving step and the first sample answer for current evaluation are discarded.

When taking the first sample question, the first sample solving step and the first sample answer as the pre-training data in the case where the obtained data evaluation result is determined to meet the preset requirement, the second processing unit 403 may further: input the first sample question into a data generation model to obtain a candidate solving step and/or a candidate answer output by the data generation model; and in the case where the candidate solving step is determined to be similar to the first sample solving step and/or the candidate answer is determined to be similar to the first sample answer, take the first sample question, the first sample solving step and the first sample answer as the pre-training data.

That is, after primarily cleaning the obtained triple by the large language model, the second processing unit 403 may further finally clean the triple by the data generation model obtained by pre-training, thereby further improving the accuracy of the obtained pre-training data.

If it is determined that the candidate solving step is not similar to the first sample solving step and/or the candidate answer is not similar to the first sample answer, the second processing unit 403 may discard the currently used first sample question, first sample solving step and first sample answer; or acquire the solving step and the answer corresponding to the first sample question in a manual labeling mode.

In addition, the second processing unit 403 may further set a general rule to discard the triple not meeting the general rule.

In the present embodiment, after the second processing unit 403 obtains the first sample answer, the first pre-training unit 404 and the second pre-training unit 405 may pre-train the step planning model and the large language model respectively.

When pre-training the step planning model according to the first sample question and the first sample solving step, the first pre-training unit 404 may first input the first sample question into the step planning model to obtain a first prediction solving step output by the step planning model; and obtain a first loss function value according to the first sample solving step and the first prediction solving step, and adjust parameters of the step planning model according to the obtained first loss function value to obtain the pre-trained step planning model.

When pre-training the large language model according to the first sample question, the first sample solving step and the first sample answer, the second pre-training unit 405 may first input the first sample question and the first sample solving step into the large language model to obtain a first prediction answer output by the large language model; and acquire a second loss function value according to the first sample answer and the first prediction answer, and adjust parameters of the large language model according to the acquired second loss function value to obtain the pre-trained large language model.

In the present embodiment, after the first pre-training unit 404 and the second pre-training unit 405 complete pre-training, the constructing unit 405 acquires the question solving model according to the step planning model and the large language model obtained by pre-training.

The constructing unit 406 may directly acquire the pre-trained step planning model and the pre-trained large language model to construct the question solving model, such that after the constructed question solving model obtains the input question, the obtained input question is firstly input into the step planning model to obtain the solving step output by the step planning model, and then, the obtained input question and the solving step are input into the large language model to obtain the answer output by the large language model.

When acquiring the question solving model according to the step planning model and the large language model obtained by pre-training, the constructing unit 406 may further: acquire a second sample question, and determine a question type of the second sample question; acquire a solving step corresponding to the determined question type as a second sample solving step of the second sample question; carry out supervised fine tuning (SFT) on the step planning model obtained by the pre-training according to the second sample question and the second sample solving step; and acquire the question solving model according to the large language model obtained by the pre-training and the step planning model obtained by the SFT.

That is, the constructing unit 406 may further improve the training effect of the step planning model by performing the SFT on the step planning model, and then acquire the question solving model according to the step planning model obtained by the SFT; in addition, in the present embodiment, the solving steps are obtained according to the question types of the sample questions, such that the question solving model can output the solving steps with similar numbers or logics for the same type of questions.

When acquiring the question solving model according to the step planning model and the large language model obtained by pre-training, the constructing unit 406 may further: acquire a second sample question, and determine a question type of the second sample question; acquire a solving step corresponding to the determined question type as a second sample solving step of the second sample question; determine a solving step type of the second sample solving step, and acquire an answer corresponding to the determined solving step type as a second sample answer of the second sample question; perform SFT on the large language model obtained by pre-training according to the second sample question, the second sample solving step and the second sample answer; and acquire the question solving model according to the step planning model obtained by the pre-training and the large language model obtained by the SFT.

That is, the constructing unit 406 may further improve the training effect of the large language model by performing the SFT on the large language model, and then acquire the question solving model according to the large language model obtained by the SFT; in addition, in the present embodiment, the answers are obtained according to solving types of the sample solving steps, such that the question solving model can output the answers with similar numbers or logics for the same type of solving steps.

It can be understood that the constructing unit 406 may further perform SFT on the step planning model and the large language model obtained by pre-training at the same time, and then acquire the question solving model according to the step planning model and the large language model obtained by the SFT.

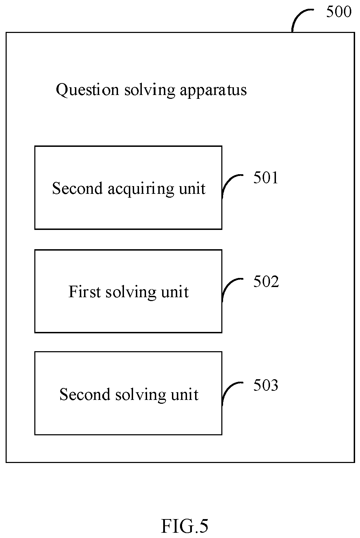

Fig. 5 is a schematic diagram according to a fifth embodiment of the present disclosure. As shown in Fig. 5, a question solving apparatus 500 according to the present embodiment includes:
a second acquiring unit 501 configured to acquire a to-be-solved question;
a first solving unit 502 configured to input the to-be-solved question into a step planning model in a question solving model to obtain a solving step output by the step planning model; and
a second solving unit 503 configured to input the to-be-solved question and the solving step into a large language model in the question solving model to obtain an answer output by the large language model.

In the technical solution of the present disclosure, the acquisition, storage and application of involved user personal information are in compliance with relevant laws and regulations, and do not violate public order and good customs.

According to the embodiment of the present disclosure, there are also provided an electronic device, a readable storage medium and a computer program product.

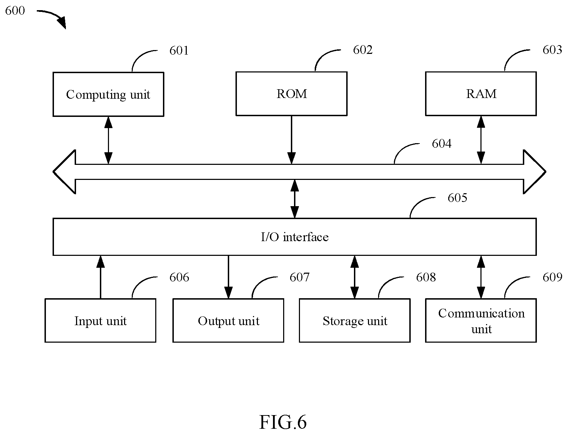

Fig. 6 is a block diagram of an electronic device for the method for training a question solving model or the question solving method according to the embodiment of the present disclosure. The electronic device is intended to represent various forms of digital computers, such as laptop computers, desktop computers, workstations, personal digital assistants, servers, blade servers, mainframe computers, and other appropriate computers. The electronic device may also represent various forms of mobile apparatuses, such as personal digital assistants, cellular telephones, smart phones, wearable devices, and other similar computing apparatuses. The components shown herein, their connections and relationships, and their functions, are meant to be exemplary only, and are not meant to limit implementation of the present disclosure described and/or claimed herein.

As shown in Fig. 6, the device 600 includes a computing unit 601 which may perform various appropriate actions and processing operations according to a computer program stored in a read only memory (ROM) 602 or a computer program loaded from a storage unit 608 into a random access memory (RAM) 603. Various programs and data necessary for the operation of the device 600 may be also stored in the RAM 603. The computing unit 601, the ROM 602, and the RAM 603 are connected with one other through a bus 604. An input/output (I/O) interface 605 is also connected to the bus 604.

The plural components in the device 600 are connected to the I/O interface 605, and include: an input unit 606, such as a keyboard, a mouse, or the like; an output unit 607, such as various types of displays, speakers, or the like; the storage unit 608, such as a magnetic disk, an optical disk, or the like; and a communication unit 609, such as a network card, a modem, a wireless communication transceiver, or the like. The communication unit 609 allows the device 600 to exchange information/data with other devices through a computer network, such as the Internet, and/or various telecommunication networks.

The computing unit 601 may be a variety of general and/or special purpose processing components with processing and computing capabilities. Some examples of the computing unit 601 include, but are not limited to, a central processing unit (CPU), a graphic processing unit (GPU), various dedicated artificial intelligence (AI) computing chips, various computing units running machine learning model algorithms, a digital signal processor (DSP), and any suitable processor, controller, microcontroller, or the like. The computing unit 601 performs the methods and processing operations described above, such as the method for training a question solving model or the question solving method. For example, in some embodiments, the method for training a question solving model or the question solving method may be implemented as a computer software program tangibly included in a machine readable medium, such as the storage unit 608.

In some embodiments, part or all of the computer program may be loaded and/or installed into the device 600 via the ROM 602 and/or the communication unit 609. When the computer program is loaded into the RAM 603 and executed by the computing unit 601, one or more steps of the method for training a question solving model or the question solving method described above may be performed. Alternatively, in other embodiments, the computing unit 601 may be configured to perform the method for training a question solving model or the question solving method by any other suitable means (for example, by means of firmware).

Various implementations of the systems and technologies described herein may be implemented in digital electronic circuitry, integrated circuitry, field programmable gate arrays (FPGA), application specific integrated circuits (ASIC), application specific standard products (ASSP), systems on chips (SOC), complex programmable logic devices (CPLD), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmit data and instructions to, a storage system, at least one input apparatus, and at least one output apparatus.

Program codes for implementing the method according to the present disclosure may be written in any combination of one or more programming languages. These program codes may be provided for a processor or a controller of a general purpose computer, a special purpose computer, or training apparatuses of other programmable vehicle positioning or positioning models, such that the program code, when executed by the processor or the controller, causes functions/operations specified in the flowchart and/or the block diagram to be implemented. The program code may be executed entirely on a machine, partly on a machine, partly on a machine as a stand-alone software package and partly on a remote machine, or entirely on a remote machine or a server.

In the context of the present disclosure, the machine readable medium may be a tangible medium which may include or store a program for use by or in connection with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, a portable computer disk, a hard disk, a random access memory (RAM), a read only memory (ROM), an erasable programmable read only memory (EPROM or flash memory), an optical fiber, a portable compact disc read only memory (CD-ROM), an optical storage device, a magnetic storage device, or any suitable combination of the foregoing.

To provide interaction with a user, the systems and technologies described here may be implemented on a computer having: a display apparatus (for example, a cathode ray tube (CRT) or liquid crystal display (LCD) monitor) for displaying information to a user; and a keyboard and a pointing apparatus (for example, a mouse or a trackball) by which a user may provide input for the computer. Other kinds of apparatuses may also be used to provide interaction with a user; for example, feedback provided for a user may be any form of sensory feedback (for example, visual feedback, auditory feedback, or tactile feedback); and input from a user may be received in any form (including acoustic, speech or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN) and the Internet.

A computer system may include a client and a server. Generally, the client and the server are remote from each other and interact through the communication network. The relationship between the client and the server is generated by virtue of computer programs which run on respective computers and have a client-server relationship to each other. The server may be a cloud server, also called a cloud computing server or a cloud host, and is a host product in a cloud computing service system, so as to overcome the defects of high management difficulty and weak service expansibility in conventional physical host and virtual private server (VPS) service. The server may also be a server of a distributed system, or a server incorporating a blockchain.

It should be understood that various forms of the flows shown above may be used and reordered, and steps may be added or deleted. For example, the steps described in the present disclosure may be executed in parallel, sequentially, or in different orders, which is not limited herein as long as the desired results of the technical solution disclosed in the present disclosure may be achieved.

The above-mentioned implementations are not intended to limit the scope of the present disclosure. It should be understood by those skilled in the art that various modifications, combinations, sub-combinations and substitutions may be made, depending on design requirements and other factors. Any modification, equivalent substitution and improvement made within the spirit and principle of the present disclosure all should be included in the extent of protection of the present disclosure.

## Claims

1. A method for training a question solving model, comprising:
acquiring (S101) a first sample question;
inputting (S102) the first sample question and a solving step grabbing template into a large language model to obtain a first sample solving step output by the large language model;
inputting (S103) the first sample question, the first sample solving step and an answer grabbing template into the large language model to obtain a first sample answer output by the large language model;
pre-training (S104) a step planning model according to the first sample question and the first sample solving step;
pre-training (S105) the large language model according to the first sample question, the first sample solving step and the first sample answer; and
acquiring (S106) the question solving model according to the step planning model and the large language model obtained by pre-training.

2. The method according to claim 1, further comprising:
inputting the first sample question, the first sample solving step, the first sample answer and a data evaluation template into the large language model to obtain a data evaluation result output by the large language model; and
in the case where the data evaluation result is determined to meet a preset requirement, taking the first sample question, the first sample solving step and the first sample answer as the pre-training data.

3. The method according to claim 2, wherein the taking the first sample question, the first sample solving step and the first sample answer as the pre-training data comprises:
inputting the first sample question into a data generation model to obtain a candidate solving step and/or a candidate answer output by the data generation model; and
in the case where the candidate solving step is determined to be similar to the first sample solving step and/or the candidate answer is determined to be similar to the first sample answer, taking the first sample question, the first sample solving step and the first sample answer as the pre-training data.

4. The method according to claim 1, wherein the acquiring the question solving model according to the step planning model and the large language model obtained by pre-training comprises:
acquiring a second sample question, and determining a question type of the second sample question;
acquiring a solving step corresponding to the question type as a second sample solving step of the second sample question;
carrying out supervised fine tuning on the step planning model obtained by the pre-training according to the second sample question and the second sample solving step; and
acquiring the question solving model according to the large language model obtained by the pre-training and the step planning model obtained by the supervised fine tuning.

5. The method according to claim 1, wherein the acquiring the question solving model according to the step planning model and the large language model obtained by pre-training comprises:
acquiring a second sample question, and determining a question type of the second sample question;
acquiring a solving step corresponding to the question type as a second sample solving step of the second sample question;
determining a solving step type of the second sample solving step, and acquiring an answer corresponding to the solving step type as a second sample answer of the second sample question;
performing supervised fine tuning on the large language model obtained by pre-training according to the second sample question, the second sample solving step and the second sample answer; and
acquiring the question solving model according to the step planning model obtained by the pre-training and the large language model obtained by the supervised fine tuning.

6. The method according to claim 1, wherein the acquiring the question solving model according to the step planning model and the large language model obtained by pre-training comprises:
acquiring a second sample question, and determining a question type of the second sample question;
acquiring a solving step corresponding to the question type as a second sample solving step of the second sample question;
determining a solving step type of the second sample solving step, and acquiring an answer corresponding to the solving step type as a second sample answer of the second sample question;
carrying out supervised fine tuning on the step planning model obtained by the pre-training according to the second sample question and the second sample solving step; and
performing supervised fine tuning on the large language model obtained by pre-training according to the second sample question, the second sample solving step and the second sample answer; and
acquiring the question solving model according to the step planning model and the large language model obtained by the supervised fine tuning.

7. The method according to claim 1, wherein the pre-training a step planning model according to the first sample question and the first sample solving step comprises:
inputting the first sample question into the step planning model to obtain a first prediction solving step output by the step planning model;
obtaining a first loss function value according to the first sample solving step and the first prediction solving step; and
adjusting parameters of the step planning model according to the first loss function value to obtain the pre-trained step planning model.

8. The method according to claim 1, wherein the pre-training the large language model according to the first sample question, the first sample solving step and the first sample answer comprises:
inputting the first sample question and the first sample solving step into the large language model to obtain a first prediction answer output by the large language model;
acquiring a second loss function value according to the first sample answer and the first prediction answer; and
adjusting parameters of the large language model according to the second loss function value to obtain the pre-trained large language model.

9. A question solving method, comprising:
acquiring (S301) a to-be-solved question;
inputting (S302) the to-be-solved question into a step planning model in a question solving model to obtain a solving step output by the step planning model; and
inputting (S303) the to-be-solved question and the solving step into a large language model in the question solving model to obtain an answer output by the large language model;
wherein the question solving model is obtained by performing training with the method according to any one of claims 1 to 8.

10. An apparatus (400) for training a question solving model, comprising:
a first acquiring unit (401) configured to acquire a first sample question;
a first processing unit (402) configured to input the first sample question and a solving step grabbing template into a large language model to obtain a first sample solving step output by the large language model;
a second processing unit (403) configured to input the first sample question, the first sample solving step and an answer grabbing template into the large language model to obtain a first sample answer output by the large language model;
a first pre-training unit (404) configured to pre-train a step planning model according to the first sample question and the first sample solving step;
a second pre-training unit (405) configured to pre-train the large language model according to the first sample question, the first sample solving step and the first sample answer; and
a constructing unit (406) configured to acquire the question solving model according to the step planning model and the large language model obtained by pre-training.

11. The apparatus (400) according to claim 10, wherein the second processing unit (403) is further configured to:
input the first sample question, the first sample solving step, the first sample answer and a data evaluation template into the large language model to obtain a data evaluation result output by the large language model; and
in the case where the data evaluation result is determined to meet a preset requirement, take the first sample question, the first sample solving step and the first sample answer as the pre-training data.

12. A question solving apparatus (500), comprising:
a second acquiring unit (501) configured to acquire a to-be-solved question;
a first solving unit (502) configured to input the to-be-solved question into a step planning model in a question solving model to obtain a solving step output by the step planning model; and
a second solving unit (503) configured to input the to-be-solved question and the solving step into a large language model in the question solving model to obtain an answer output by the large language model;
wherein the question solving model is obtained by performing training with the apparatus according to any one of claims 10 to 11.

13. An electronic device, comprising:
at least one processor; and
a memory connected with the at least one processor communicatively;
wherein the memory stores instructions executable by the at least one processor to enable the at least one processor to perform the method according to any one of claims 1 to 9.

14. A non-transitory computer readable storage medium with computer instructions stored thereon, wherein the computer instructions are used for causing a computer to perform the method according to any one of claims 1 to 9.

15. A computer program product comprising a computer program which, when executed by a processor, implements the method according to any one of claims 1 to 9.
